# EUROPÄISCHE PATENTANMELDUNG

(11) **EP 2 198 719 A2**
(43) Veröffentlichungstag der Anmeldung: **23.06.2010**
(21) Anmeldenummer: 09177724.3
(22) Anmeldetag: 02.12.2009
(51) Int. Cl.: A22C 17/00

(54) **Vorrichtung zur mechanischen Behandlung von Lebensmittelprodukten**

(30) Priorität: 19.12.2008 DE 202008016830 U
(71) Anmelder: Schröder Maschinenbau KG, 33824 Werther (DE)
(72) Erfinder: Umbach, Christoph, 33824, Werther (DE); Danwerth, Peter J., 33803, Steinhagen (DE)
(74) Vertreter: TER MEER - STEINMEISTER & PARTNER GbR

(57) **Zusammenfassung**

Vorrichtung zur mechanischen Behandlung von Lebensmittelprodukten (10), mit einem beweglich relativ zu den Lebensmittelprodukten gehaltenen und gegen deren Oberfläche anlegbaren Bearbeitungswerkzeug (18), **dadurch gekennzeichnet, daß** das Bearbeitungswerkzeug (18) an einem mehrachsigen, numerisch gesteuerten Roboter (50) gehalten ist.

## Beschreibung

Die Erfindung betrifft eine Vorrichtung zur mechanischen Behandlung von Lebensmittelprodukte, mit einem beweglich relativ zu den Lebensmittelprodukten gehaltenen und gegen deren Oberfläche anlegbaren Bearbeitungswerkzeug. Insbesondere befaßt sich die Erfindung mit einer Vorrichtung zu Behandlung von Fleisch, Fisch oder Geflügel.

Bei dem Bearbeitungswerkzeug kann es sich beispielsweise um einen Hammer zum Weichklopfen von Fleich handeln oder auch um einen mit kurzen Messern bestückten Steaker.

EP 0 743 007 B1 beschreibt eine Vorrichtung dieser Art, bei welcher der Hammer hydraulisch angetrieben wird so daß er verkikale Schläge auf das Fleisch ausübt.

Aufgabe der Erfindung ist es, eine Vorrichtung dieser Art zu schaffen, die sich flexibler einsetzen läßt.

Diese Aufgabe wird erfindungsgemäß dadurch gelöst, daß das Bearbeitungswerkzeug an einem mehrachsigen, numerisch gesteuerten Roboter gehalten ist.

Vorteilhafte Ausgestaltungen sind in den Unteransprüchen angegeben.

Der Roboter ermöglicht nicht nur eine einfache Änderung der Hubhöhe des Bearbeitungswerkzeugs, sondern je nach Anzahl der Achsen des Roboters auch kompliziertere Bewegungsmuster zur Einwirkung auf das Produkt, beispielsweise schräg zur Transportrichtung eines Förderers für die Lebensmittelprodukte, sowie ggf. auch ein Mitführen des Bearbeitungswerkzeugs mit den Lebensmittelprodukten während des Bearbeitungsvorgangs, so daß die Lebensmittelprodukte kontinuierlich transportiert werden können.

Weiterhin bietet der Roboter die vorteilhafte Möglichkeit, das Bearbeitungswerkzeug einfach zu einer Reinigungsstation zu überführen, wo es gereinigt werden kann.

Besonders vorteilhaft ist die Kombination mit einer Scan-Einrichtung, mit der die Lage und Abmessungen der Lebensmittelprodukte auf dem Förderer vorab erfaßt werden können, so daß die Einstellposition und der Hub des Bearbeitungswerkzeugs entsprechend gesteuert werden können.

Im folgenden werden Ausführungsbeispiele anhand der Zeichnung näher erläutert.
- Fig. 1: eine schematische Ansicht einer erfindungsgemäßen Vorrichtung gemäß einem ersten Ausführungsbeispiel; und
- Fig. 2 und 3: eine Font- bzw. Seitenansicht einer Vorrichtung gemäß einem zweiten Ausführungsbeispiel.

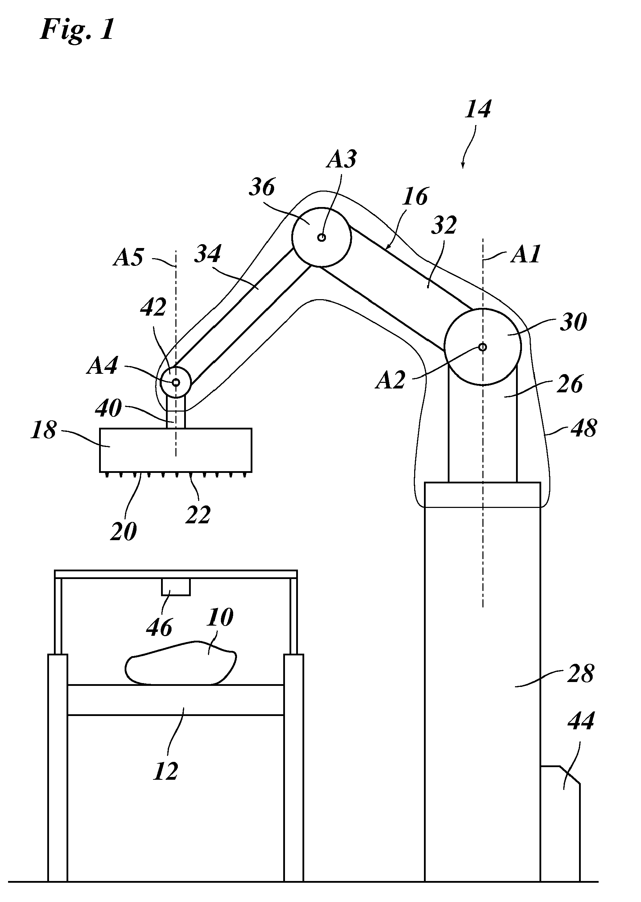

Fig. 1 zeigt eine Vorrichtung zur mechanischen Behandlung von Lebensmittelprodukten, im folgenden kurz als Produkt 10 bezeichnet, beispielsweise eine Klopfvorrichtung zum Weichklopfen von Fleischprodukten.

Das Produkt 10 wird im gezeigten Beispiel in der Richtung senkrecht zur Ebene der Zeichnung auf einem Förderer 12 transportiert. Neben dem Förderer 12 ist ein Roboter 14 installiert, der einen mehrgliedrigen, gelenkigen Arm 16 aufweist. Am freien Ende des Armes 16 befindet sich ein Bearbeitungswerkzeug 18, z. b. ein Hammer, der an seiner Arbeisfläche 20 (an der Unterseite) mit Spikes 22 oder kurzen Messern zum Weichmachen des Fleisches bestückt ist.

Das Produkt 10 wird mit Hilfe des Förderers 12 schrittweise transportiert, und wenn es in einer Position in Höhe des Roboters 14 zum Stillstand kommt, wird das Bearbeitungswerkzeug 18 mit Hilfe des Arms 16 des Roboters so positioniert, daß er sich über dem Produkt befindet. Dann wird mit Hilfe des Arms 16 das Bearbeitungswerkzeug einmal oder mehrmals abgesenkt und wieder angehoben, so es Schläge auf das Prokukt ausübt. Nach einem weiteren Transportschritt des Förderers kann dann ein neuer Zyklus beginnen.

Der Arm 16 des Roboters weist im gezeigten Beispiel eine Basis 26 auf, die relativ zu einem ortsfesten Sockel 28 des Roboters um eine vertikale Achse A1 drehbar ist und an ihrem oberen Ende ein Gelenk 30 trägt. Dieses Gelenk 30 verbindet die Basis 26 mit einem ersten Glied 32 des Roboterarms, das relativ zur Basis 26 um eine waagerechte zweite Achse A2 schwenkbar ist.

Ein zweites Glied 34 des Roboterarms ist über ein Gelenk 36 mit dem ersten Glied 32 verbunden und um eine waagerechte dritte Achse A3 schwenkbar.

Entsprechend ist ein drittes Glied 40 des Roboterarms über ein Gelenk 42 mit dem zweiten Glied 34 verbunden und um eine waagerechte vierte Achse A4 schwenkbar.

Das Bearbeitungswerkzeug 18 ist relativ zu dem dritten Arm 40 um eine vertikale fünfte Achse A5 drehbar.

Der Roboter 14 weist in bekannter Weise eine elektronische (NC-) Steuerung 44 auf, mit der das Bewegungsschema der verschiedenen beweglichen Elemente des Roboterarms programmiert werden kann.

Mit Hilfe der drei waagerechten Achsen A2, A3 und A4 kann nicht nur eine vertikale Auf- und Abbewegung des Bearbeitungswerkzeugs 18 gesteuert werden, sondern auch eine horizontale Bewegung, mit der die Position des Bearbeitungswerkzeugs an die Lage des Produktes 10 auf dem Förderer angepaßt werden kann. Im gezeigten Beispiel ist an dem Förderer eine Scan-Einrichtung 46 angeordet, beispielsweise ein optoelektronischer Scanner oder eine Kamera mit zugehöriger Bildverarbeitung, mit der die Lage des Produktes 10 auf dem Förderer erfaßt werden kann. Das Bearbeitungswerkzeug kann dann anhand der so erfaßten Position des Produktes gezielt gesteuert werden.

Wenn in der Verarbeitungslinie, zu welcher der Förderer 12 gehört, Produkte verarbeitet werden, die nicht mechanisch behandelt zu werden brauchen, kann das Bearbeitungswerkzeug 18 mit Hilfe des Arms 16 einfach zur Seite geschwenkt werden, so daß Platz für andere Bearbeitungsvorgänge bzw. -vorrichtungen geschaffen wird. Das Bearbeitungswerkzeug 18 kann unterdessen beispielsweise in einer nicht gezeigten, in Reichweite des Armes 16 angeordneten Reinigungsstation gereinigt werden, beispielsweise mittels Ultraschallreinigung in einem Flüssigkeitsbad.

Im gezeigten Beispiel erlauben es die beiden vertikalen Achsen A1 und A5 des Roboters auch, das Bearbeitungswerkzeug 18 während der Bewegung des Produktes 10 auf dem Förderer nachzuführen (ohne daß sich das Bearbeitungswerkzeug relativ zu dem Produkt verdreht), so daß der Transport des Produktes auf dem Förderer 12 nicht unterbrochen zu werden braucht und somit eine wesentlich effizientere Durchführung der Bearbeitungsvorgänge möglich ist. In einer weiteren, nicht gezeigten Ausführungsform, kann auf den Förderer ganz verzichtet werden, und stattdessen wird das Produkt mit Hilfe eines Transportwagens in die Reichweite des Armes 16 gebracht. Die Lage der verschiedenen Fleischstücke wird dann beispielsweise fotografisch erfaßt, und der Roboter wird automatisch so gesteuert, daß das Bearbeitungswerkzeug nacheinander auf die auf dem Wagen liegenden Produkte einwirkt.

Sämtliche beweglichen Teile des Armes 16 sind im gezeigten Beispiel von einer flexiblen Hülle 48 umgeben, die die Bewegungen des Arms 16 nicht behindert, jedoch sicherstellt, daß das Produkt 10 nicht mit Schmiermittel in Berührung kommt, das zum Schmieren der Gelenke 30, 36 und 42 benötigt wird.

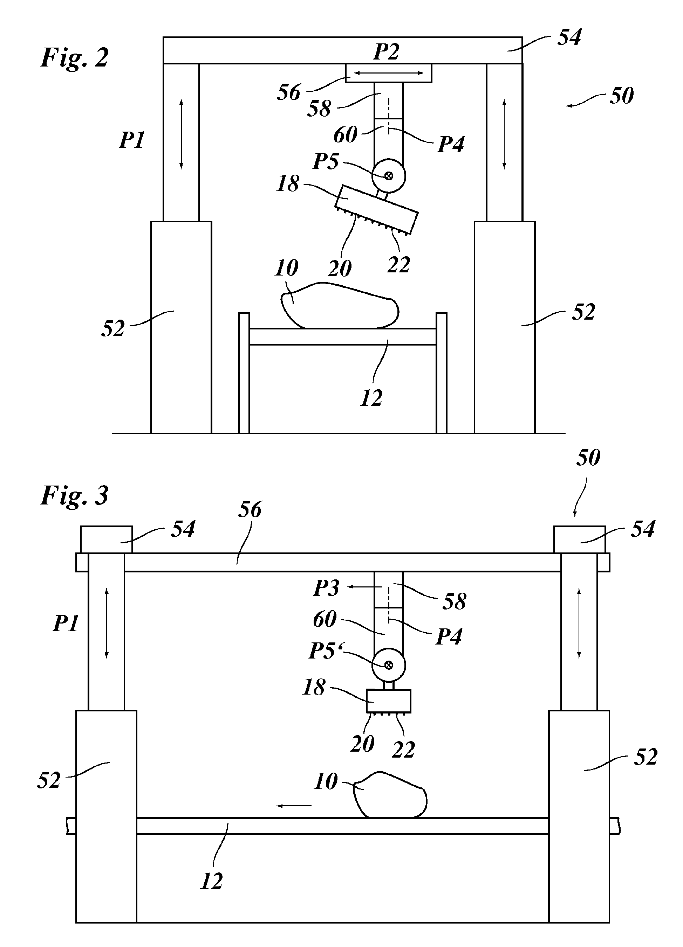

Fig. 2 und 3 zeigen ein Ausführungsbeispiel, bei dem das Bearbeitungswerkzeug 18 an einem Roboter 50 in Portalbauweise angebracht ist. In diesem Beispiel weist der Roboter 50 vier Hubsäulen 52 auf, die paarweise beiderseits des Förderers 12 angeordnet sind und längs einer ersten Achse P1 vertikal ausfahrbar und zurückziehbar sind. Die Hubsäulen 52 jedes Paares, die auf gleicher Höhe an dem Förderer 12 angeordnet sind, sind am oberen Ende durch eine Traverse 54 nach Art eines Portals verbunden. An diesem Portal ist ein Längsträger 56 längs einer zweiten Achse P2 waagerecht und rechtwinklig zur Transportrichtung des Förderers 12 verfahrbar. An der Unterseite des Längsträgers 56 ist ein Basisblock 58 angebracht, der relativ zu dem Längsträger 56 längs einer dritten Achse P3 waagerecht und parallel zur Transportrichtung des Förderers 12 beweglich ist. An der Unterseite des Basisblockes 58 ist ein Halter 60 angebracht, der relativ zu dem Basisblock um eine vertikale vierte Achse P4 drehbar ist. An dem Halter 60 ist schließlich das Bearbeitungswerkzeug 18 so angebracht, daß es um eine waagerechte fünfte Achse P5 (Fig. 2) schwenkbar ist.

Die Portalbauweise hat den Vorteil einer hohen Stabilität, so daß die bei den relativ schnellen oszillierenden Bewegungen auftretenden Reaktionskräfte gut aufgenommen werden können.

Wie Fig. 2 zeigt, kann das Bearbeitungswerkzeug 18 um die Achse P5 geneigt und so eingestellt werden, daß es schräg von oben das Produkt 10 schlägt. Die Bewegungen längs der ersten und zweiten Achsen P1, P2 lassen sich dann durch NC-Steuerung so überlagern, daß die Bewegung des Bearbeitungswerkzeugs rechtwinklig zur Arbeitsfläche 20 erfolgt.

Fig. 3 zeigt den Roboter in einem Zustand, in dem der Halter 60 um 90° um die Achse P4 gedreht worden ist, so daß das Bearbeitungswerkzeug 18 nun nicht mehr um die parallel zum Förderer 12 verlaufende Achse P5 schwenkbar ist, sondern stattdessen um eine waagerecht und rechtwinklig zum Förderer 12 verlaufende Achse P5'.

Der Basisblock 58 kann periodisch längs der Achse P3 bewegt werden, beispielsweise in der Weise, daß er sich synchron mit dem Förderer 12 mitbewegt und dann schnell in die Anfangsposition zurückkehrt. Während der mit dem Förderer 12 synchronen Bewegungsphase können die Hubsäulen 52 eingezogen werden, so daß die die Schläge ausgeführt werden, ohne daß der Förderer dazu angehalten werden muß.

Wenn die Arbeitsfläche 20 aufgrund der Verschwenkung um die Achse P5' eine geneigte Position annimmt, können die Bewegungen längs der Achsen P1 und P3 wieder so überlagert werden, daß die Bewegung rechtwinklig zur Arbeitsfläche 20 erfolgt.

## Patentansprüche

1. Vorrichtung zur mechanischen Behandlung von Lebensmittelprodukten (10), mit einem beweglich relativ zu den Lebensmittelprodukten gehaltenen und gegen deren Oberfläche anlegbaren Bearbeitungswerkzeug (18), **dadurch gekennzeichnet, daß** das Bearbeitungswerkzeug (18) an einem mehrachsigen, numerisch gesteuerten Roboter (14; 50) gehalten ist.

2. Vorrichtung nach Anspruch 1, **dadurch gekennzeichnet, daß** der Roboter (14; 50) an einem Förderer (12) angeordnet ist und das Bearbeitungswerkzeug (18) durch den Roboter in Transportrichtung mit dem Förderer (12) mitbewegbar ist.

3. Vorrichtung nach Anspruch 1 oder 2, **dadurch gekennzeichnet, daß** der Roboter (14; 50) an einem Förderer (12) angeordnet ist und das Bearbeitungswerkzeug (18) um eine parallel zur Transportrichtung des Förderers (12) verlaufende Achse (A4; P5) schwenkbar ist.

4. Vorrichtung nach einem der vorstehenden Ansprüche, **dadurch gekennzeichnet, daß** der Roboter (50) an einem Förderer (12) angeordnet ist und das Bearbeitungswerkzeug (18) um eine waagerecht und rechtwinklig zur Transportrichtung des Förderers (12) verlaufende Achse (P5') schwenkbar ist.

5. Vorrichtung nach einem der vorstehenden Ansprüche, **dadurch gekennzeichnet, daß** das Bearbeitungswerkzeug (18) am freien Ende eines gelenkigen Armes (16) des Roboters (14) angebracht ist.

6. Vorrichtung nach einem der Ansprüche 1 bis 4, **dadurch gekennzeichnet, daß** der Roboter (50) ein Portalroboter ist.

7. Vorrichtung nach einem der vorstehenden Ansprüche, **gekennzeichnet durch** eine Einrichtung (46) zur Erfassung der Lage der Lebensmittelprodukte (10) und eine Steuereinrichtung (44) zur Steuerung der horizontalen Position des Bearbeitungswerkzeugs (18) in Abhängigkeit von der erfaßten Position der Lebensmittelprodukte (10).
